# FASCICULE DE BREVET EUROPEEN

(11) **EP 3 045 984 B1**
(45) Date de publication et mention de la délivrance du brevet: **23.03.2022**
(21) Numéro de dépôt: 16153675.0
(22) Date de dépôt: 04.07.2013
(51) Int. Cl.: G05B 15/02, E06B 9/68, E06B 9/32

(54) **PROCÉDÉ ET DISPOSITIF DE COMMANDE D'AU MOINS UN DISPOSITIF D'OCCULTATION D'AU MOINS UNE OUVERTURE D'UNE PIÈCE D'UN BÂTIMENT**
VERFAHREN UND VORRICHTUNG ZUR STEUERUNG MINDESTENS EINER VERDUNKELUNGSVORRICHTUNG FÜR MINDESTENS EIN ÖFFNUNGSELEMENT EINES GEBÄUDETEILS
METHOD AND DEVICE FOR CONTROLLING AT LEAST ONE DEVICE FOR CONCEALING AT LEAST ONE OPENING OF A ROOM IN A BUILDING

(30) Priorité: 06.07.2012 FR 1256500
(43) Date de publication de la demande: 20.07.2016
(62) Demande divisionnaire de: 13175162.0
(73) Titulaire: Delta Dore, 35270 Bonnemain (FR)
(72) Inventeur: LE, Duc Minh Khang, 35270 BONNEMAIN (FR); BOURDAIS, Romain, 35270 BONNEMAIN (FR); GUEGUEN, Hervé, 35270 BONNEMAIN (FR); PLEVIN, Jacques, 35270 BONNEMAIN (FR)
(74) Mandataire: Cabinet Le Guen Maillet

(56) Documents cités:
- WO-A1-92/00557
- DE-A1-102004 005 962
- US-A- 6 064 949
- US-A1- 2007 156 256
- US-A1- 2011 066 302

## Description

La présente invention concerne un procédé et dispositif de commande d'au moins un dispositif d'occultation d'au moins une ouverture d'une pièce d'un bâtiment.

Plus particulièrement, l'invention se situe dans le domaine de la gestion de la température d'une pièce d'un bâtiment en contrôlant un dispositif d'occultation d'au moins une ouverture.

L'apport énergétique du rayonnement solaire est un élément non négligeable dans une pièce. Celui-ci contribue à réduire les besoins en énergie fossile ou électrique nécessaires au chauffage de la pièce en période hivernale mais peut contribuer à augmenter les besoins en énergie fossile ou électrique nécessaires au rafraîchissement de la pièce en période estivale comme décrit dans le document d'état de la technique US-A1-2007/0156256.

L'invention vise à optimiser l'apport énergétique du rayonnement solaire qui est un élément non négligeable dans une pièce de manière à garantir que les besoins en énergie fossile ou électrique nécessaires au chauffage de la pièce soient réduits.

L'invention est définie par les caractéristiques techniques des revendications indépendantes 1 et 10. Les caractéristiques additionnelles des revendications dépendantes 2 à 9 définissent des options supplémentaires de l'invention.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
- la Fig. 1 représente un bâtiment dans lequel la présente invention est implémentée ;
- la Fig. 2 représente un schéma bloc d'un dispositif de commande d'au moins un dispositif d'occultation d'au moins une ouverture selon la présente invention ;
- la Fig. 3 représente un exemple de courbe de variation du rayonnement solaire sur une période de vingt-quatre heures ainsi que des droites permettant la décision de la commande d'au moins un dispositif d'occultation d'au moins une ouverture selon la présente invention ;
- la Fig. 4 représente un diagramme illustrant l'algorithme général exécuté par le dispositif de commande d'au moins un dispositif d'occultation d'au moins une ouverture selon la présente invention ;
- la Fig. 5 représente un diagramme illustrant l'algorithme exécuté par le dispositif de commande pour l'exécution de la fonction criticité selon la présente invention ;
- la Fig. 6a représente un diagramme illustrant l'algorithme exécuté par le dispositif de commande pour la détermination, en période de fort ensoleillement , de la fonction paramètre volet permettant la décision de la commande d'au moins un dispositif d'occultation d'au moins une ouverture selon la présente invention ;
- la Fig. 6b représente un diagramme illustrant l'algorithme exécuté par le dispositif de commande pour la détermination, en période de faible ensoleillement, de la fonction paramètre volet permettant la décision de la commande d'au moins un dispositif d'occultation d'au moins une ouverture selon la présente invention ;
- la Fig. 7 représente un diagramme illustrant l'algorithme exécuté par le dispositif de commande pour la détermination d'un paramètre de décision de la commande d'au moins un dispositif d'occultation d'au moins une ouverture selon la présente invention ;
- la Fig. 8a représente un diagramme illustrant l'algorithme exécuté par le dispositif de commande pour la gestion, en période de faible ensoleillement, d'une temporisation pour la commande d'au moins un dispositif d'occultation d'au moins une ouverture selon la présente invention ;
- la Fig. 8b représente un diagramme illustrant l'algorithme exécuté par le dispositif de commande pour la gestion, en période de fort ensoleillement, d'une temporisation pour la commande d'au moins un dispositif d'occultation d'au moins une ouverture selon la présente invention ;
- la Fig. 9 représente un diagramme illustrant l'algorithme exécuté par le dispositif de commande pour la détermination, en période de fort ensoleillement, de différentes positions d'au moins un dispositif d'occultation d'au moins une ouverture selon la présente invention ;
- la Fig. 10 représente un diagramme illustrant l'algorithme exécuté par le dispositif de commande pour la détermination d'un paramètre de commande d'au moins un dispositif d'occultation d'au moins une ouverture selon la présente invention.

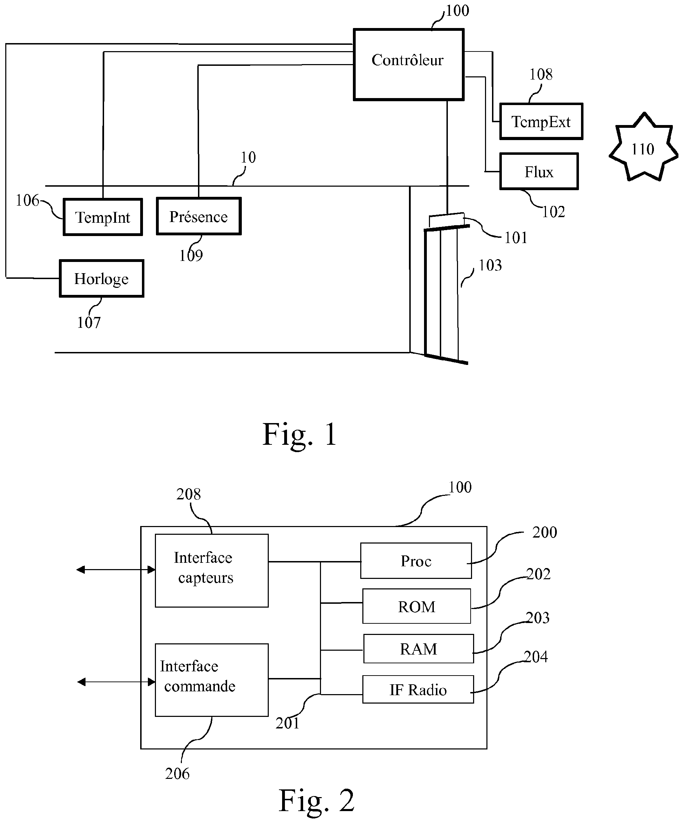

La **Fig. 1**représente un bâtiment dans lequel la présente invention est implémentée.

Le bâtiment comporte au moins une pièce 10 disposant d'au moins une ouverture 103 orientée dans une direction telle que le rayonnement solaire contribue au chauffage de la pièce 10.

L'ouverture 103 peut être occultée par un dispositif d'occultation 101 tel que par exemple un volet roulant motorisé 101 ou un store motorisé.

L'ouverture 103 est, dans un pignon du bâtiment par exemple et de manière non limitative, orientée au sud, à l'est ou au nord.

L'ouverture 103 peut aussi être une ouverture dans le toit du bâtiment par exemple et de manière non limitative orientée au sud, à l'est ou à l'ouest.

Selon la présente invention, un dispositif de commande 100, ou contrôleur, pilote le volet roulant 101.

Au contrôleur 100 sont reliés un capteur de rayonnement 102 du rayonnement du soleil 110, un capteur de température 108 placé à l'extérieur du bâtiment, un capteur de température 106 de la pièce 10 ou du bâtiment, une horloge 107 et éventuellement un capteur de présence 109.

L'horloge 107 est une horloge apte à fournir une information d'horodatage permettant de déterminer l'heure, le jour, et la saison.

Selon la présente invention, la saison est déterminée à partir de la température mesurée par le capteur de température 108 à heure prédéterminée ou si l'horloge est une horloge astronomique à une heure correspondant au lever du soleil voire plus ou moins une heure.

L'heure prédéterminée à laquelle la température est mesurée par le capteur de température pour déterminer la saison est par exemple comprise entre 4 et 6 heures du matin, préférentiellement à 5 heures du matin.

Il est à remarquer que le contrôleur 100, l'horloge 107, le capteur de température 106 peuvent être regroupés en un unique dispositif de commande et de programmation.

Selon la présente invention, le dispositif de commande comporte :
- des moyens d'obtention de la température de la pièce du bâtiment,
- des moyens d'obtention d'une valeur du rayonnement solaire,
- des moyens de comparaison de la température de la pièce du bâtiment avec au moins un seuil de température,
- des moyens de détermination d'au moins un seuil de comparaison du rayonnement solaire à partir du résultat de la comparaison de la température de la pièce avec ledit au moins un seuil,
- des moyens de comparaison de la valeur du rayonnement solaire obtenu avec au moins un seuil de comparaison du rayonnement solaire déterminé,
- des moyens de commande du dispositif d'occultation en fonction de la comparaison du rayonnement solaire avec le seuil de comparaison du rayonnement solaire déterminé.

Selon la présente invention, une période de fort ensoleillement correspond à l'été et/ou la seconde moitié du printemps et/ou la première partie de l'automne une période de faible ensoleillement telle que l'hiver et/ou la première moitié du printemps et/ou la seconde moitié de l'automne.

Les dates correspondant aux périodes de faible ensoleillement et/ou de fort ensoleillement peuvent être enregistrées dans le dispositif de commande 100 lors de la réalisation de celui-ci ou enregistrées par l'installateur du dispositif de commande 100 lors de la mise en service du dispositif de commande 100 ou être enregistrées par l'occupant du bâtiment 10 dans lequel la présente invention est implémentée ou être mises à jour par l'intermédiaire d'un serveur informatique par l'intermédiaire d'un réseau de télécommunication auquel est relié le dispositif de commande non représenté en Fig. 1.

Selon la présente invention, la saison est déterminée à partir de la température mesurée par le capteur de température 108 à heure prédéterminée ou si l'horloge est une horloge astronomique à une heure correspondant au lever du soleil voire plus ou moins une heure.

L'heure prédéterminée à laquelle la température est mesurée par le capteur de température pour déterminer la saison est par exemple comprise entre 4 et 6 heures du matin, préférentiellement à 5 heures du matin.

Si la température mesurée par le capteur de température 108 à l'heure prédéterminée ou si l'horloge est une horloge astronomique à une heure correspondant au lever du soleil voire plus ou moins une heure est inférieure à 10 degrés, la saison est considérée être l'hiver.

Si la température mesurée par le capteur de température 108 à l'heure prédéterminée ou si l'horloge est une horloge astronomique à une heure correspondant au lever du soleil voire plus ou moins une heure est supérieure à 10 degrés et inférieure à 16 degrés, la saison est considérée être le printemps ou l'automne.

Si la température mesurée par le capteur de température 108 à l'heure prédéterminée ou si l'horloge est une horloge astronomique à une heure correspondant au lever du soleil voire plus ou moins une heure est supérieure à 16 degrés, la saison est considérée être l'été.

Selon un autre mode particulier de réalisation, le lever du jour est déterminé à partir du capteur de rayonnement 102. Lorsque la mesure du rayonnement solaire dépasse une valeur comprise entre 5 à 10/Wm², il est considéré que c'est le lever du jour.

Si la température mesurée par le capteur de température 108 est inférieure à 10 degrés lorsque la mesure du rayonnement solaire dépasse une valeur comprise entre 5 à 10/Wm², la saison est considérée être l'hiver.

Si la température mesurée par le capteur de température 108 est supérieure à 10 degrés et inférieure à 16 degrés lorsque la mesure du rayonnement solaire dépasse une valeur comprise entre 5 à 10/Wm², la saison est considérée être le printemps ou l'automne.

Si la température mesurée par le capteur de température 108 est supérieure à 16 degrés lorsque la mesure du rayonnement solaire dépasse une valeur comprise entre 5 à 10/Wm², la saison est considérée être l'été.

Bien entendu, les valeurs de 10 et/ou 16 degrés sont des modes préférés de réalisation de la présente invention et l'homme du métier comprendra aisément que ces valeurs de températures peuvent varier de plus ou moins deux degrés.

La **Fig. 2** représente un schéma bloc d'un dispositif de pilotage d'au moins un dispositif d'occultation d'au moins une ouverture selon la présente invention.

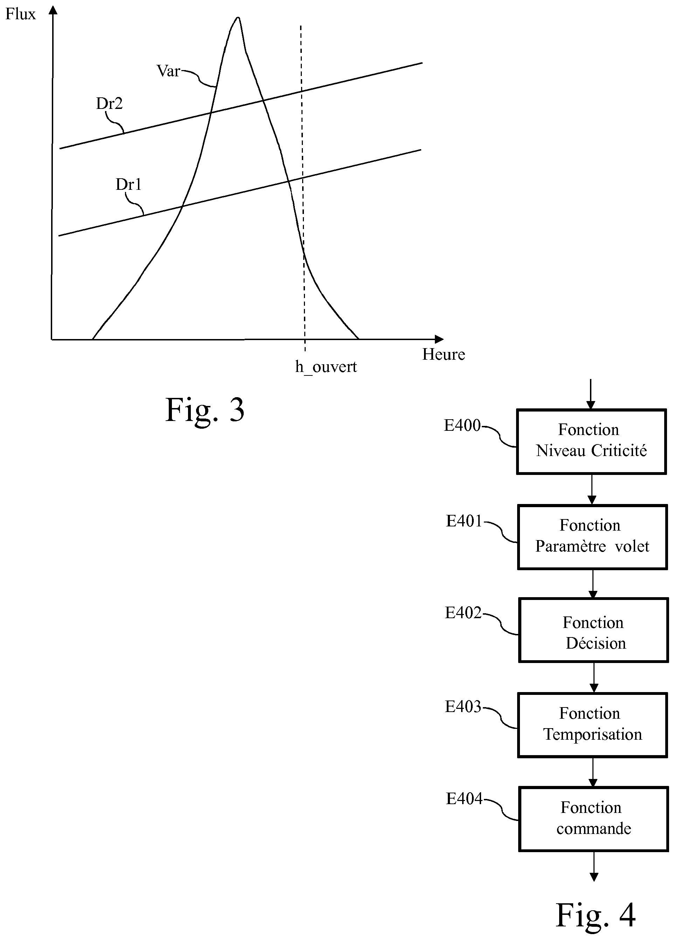

Le contrôleur 100 est adapté à effectuer à partir d'un ou plusieurs modules logiciels les étapes des algorithmes tels que décrits en référence aux Figs. 4 à 10.

Le contrôleur 100 comporte un bus de communication 201 auquel sont reliés un processeur 200, une mémoire non volatile 202, une mémoire vive 203, éventuellement une interface radio ou infrarouge 204 permettant la réception de codes issus d'une télécommande associée au contrôleur 100, une interface de commande 206 permettant la commande du dispositif d'occultation 101, et une interface capteurs 208 auxquels sont reliés les capteurs 102, 108, 106 et 109 ainsi que l'horloge.

La mémoire non volatile 202 mémorise le ou les modules logiciel(s) mettant en œuvre l'invention, ainsi que les données permettant de mettre en œuvre les algorithmes tels que décrits en référence aux Figs. 4 à 10.

De manière plus générale, les programmes selon la présente invention sont mémorisés dans un moyen de stockage. Ce moyen de stockage est lisible par le microprocesseur 200. Ce moyen de stockage est intégré ou non au contrôleur 100, et peut être amovible.

Lors de la mise sous tension du contrôleur 100, le ou les modules logiciel(s) selon la présente invention est ou sont transféré(s) dans la mémoire vive 203 qui contient alors le code exécutable selon la présente invention ainsi que les données nécessaires à la mise en œuvre de l'invention.

Il est à remarquer ici que le contrôleur 100 peut être constitué d'un ou plusieurs composant(s) électronique(s).

La **Fig. 3** représente un exemple de courbe de variation du rayonnement solaire sur une période de vingt-quatre heures ainsi que des droites permettant la décision de la commande d'au moins un dispositif d'occultation d'au moins une ouverture selon la présente invention.

Sur l'axe des abscisses est représenté le temps, sur l'axe des ordonnées est représenté le rayonnement solaire mesuré par le capteur 102.

La courbe Var représente les variations du rayonnement solaire mesuré par le capteur 102 sur une période de vingt-quatre heures.

La droite Dr1 est la représentation d'une fonction affine dont le coefficient directeur alpha1 et l'ordonnée à l'origine SF1 sont fonction de la saison et d'un niveau de criticité.

La droite Dr2 est la représentation d'une fonction affine dont le coefficient directeur alpha2 et l'ordonnée à l'origine SF2 sont fonction de la période d'ensoleillement et du niveau de criticité.

Le niveau de criticité est représentatif de l'écart entre la température mesurée par le capteur 106 et un premier et un second seuils.

Le paramètre h_ouvert définit l'heure à partir de laquelle le dispositif d'occultation 101 laissera passer la totalité ou la quasi-totalité du rayonnement solaire à travers l'ouverture 103 si d'autres conditions, explicitées par la suite, sont remplies.

Lorsque le rayonnement solaire mesuré est, à un instant donné, supérieur à la valeur de rayonnement donnée par la courbe Dr2, le dispositif d'occultation 101 occulte totalement ou en quasi-totalité l'ouverture 103 si d'autres conditions, explicitées par la suite, sont remplies.

Une occultation totale ou en quasi totalité correspond à une occultation de 75 à 100% de la surface de l'ouverture 103.

Lorsque le rayonnement solaire mesuré est, à un instant donné, inférieur à la valeur de rayonnement donnée par la courbe Dr1, le dispositif d'occultation 101laisse passer la totalité ou la quasi-totalité du rayonnement solaire à travers l'ouverture 103 si d'autres conditions, explicitées par la suite, sont remplies.

Le dispositif d'occultation 101laisse passer la totalité ou la quasi-totalité du rayonnement solaire à travers l'ouverture 103 lorsque le dispositif d'occultation 101 occulte moins de 10% de la surface de l'ouverture 103.

Lorsque le rayonnement solaire mesuré est, à un instant donné, inférieur à la valeur de rayonnement donnée par la courbe Dr2 et supérieur à la valeur de rayonnement donnée par la courbe Dr1, le dispositif d'occultation 101 laisse passer partiellement le rayonnement solaire à travers l'ouverture 103 si d'autres conditions, explicitées par la suite, sont remplies.

Le dispositif d'occultation 101 laisse passer partiellement le rayonnement solaire à travers l'ouverture 103 lorsque le dispositif d'occultation 101 occulte entre 30 et 75% de la surface de l'ouverture 103.

La **Fig. 4** représente un diagramme illustrant l'algorithme général exécuté par le dispositif de commande d'au moins un dispositif d'occultation d'au moins une ouverture selon la présente invention.

Le présent algorithme est plus précisément exécuté par le processeur 200 du contrôleur 100.

Le présent algorithme est exécuté périodiquement, par exemple toutes les dix minutes ou avec une périodicité comprise entre deux et quinze minutes. A chaque exécution du présent algorithme, le processeur 200 obtient les différentes valeurs mesurées par les capteurs 102, 106, 108, 109, l'horodatage fourni par l'horloge 107 ainsi qu'une information.

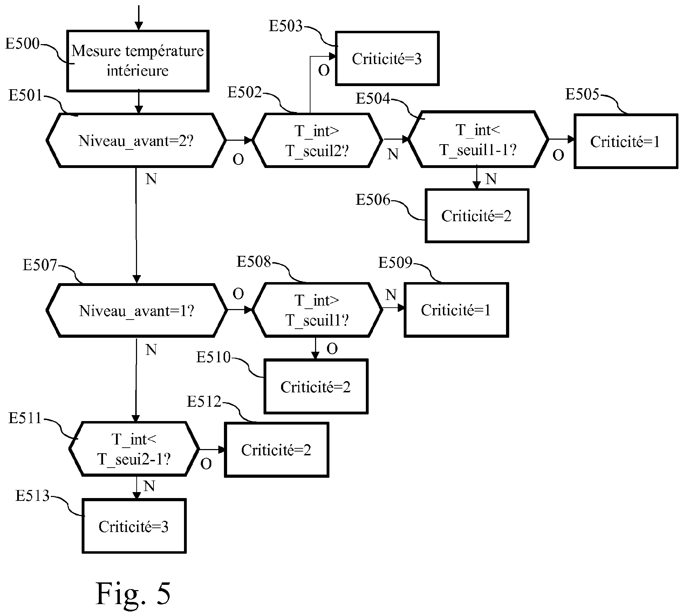

A l'étape E400, le processeur 200 lance l'exécution de la fonction niveau criticité qui sera décrite en détail en regard de la Fig. 5.

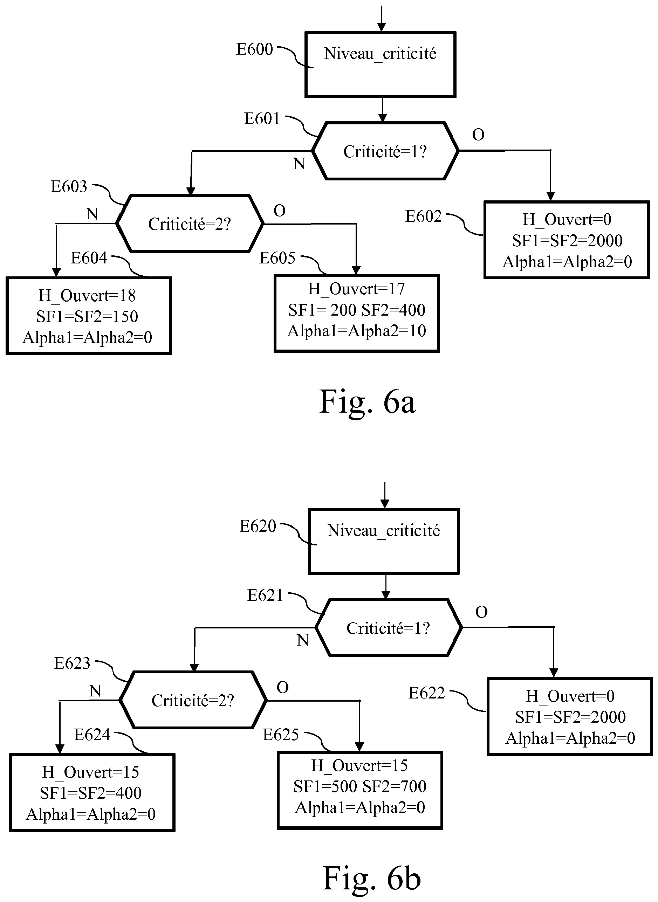

A l'étape suivante E401, le processeur 200 lance l'exécution de la fonction paramètre volet qui sera décrite en détail en regard de la Fig. 6a ou 6b.

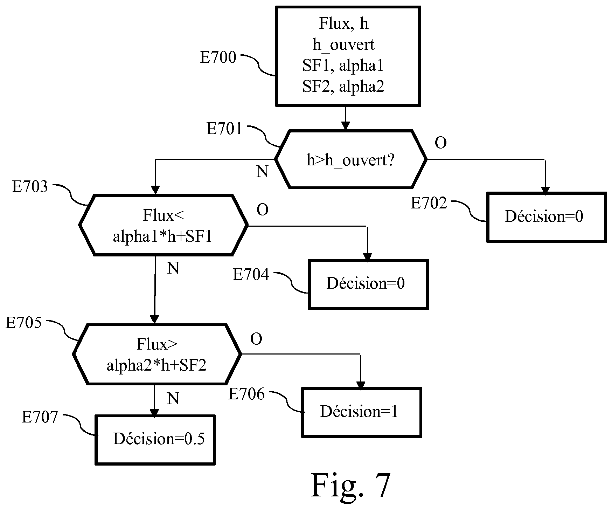

A l'étape suivante E402, le processeur 200 lance l'exécution de la fonction décision qui sera décrite en détail en regard de la Fig. 7.

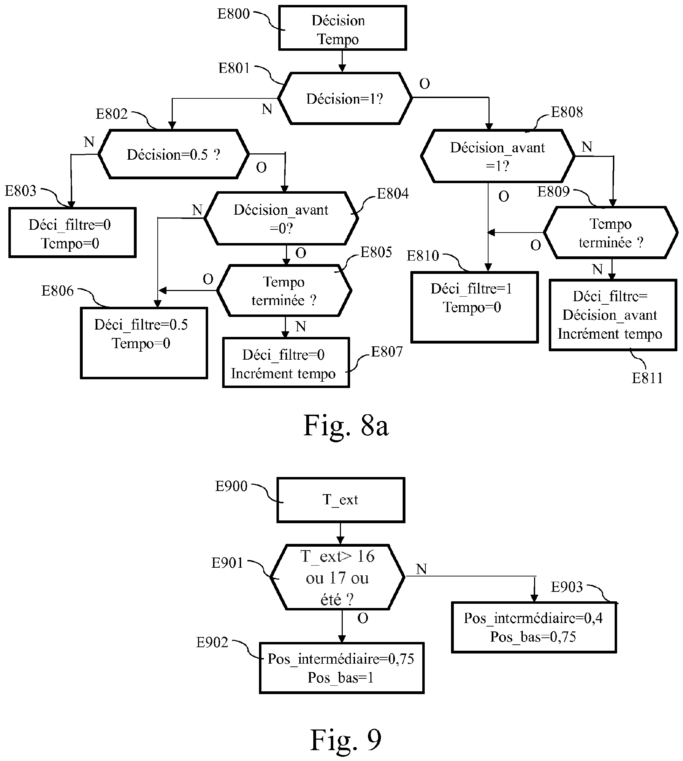

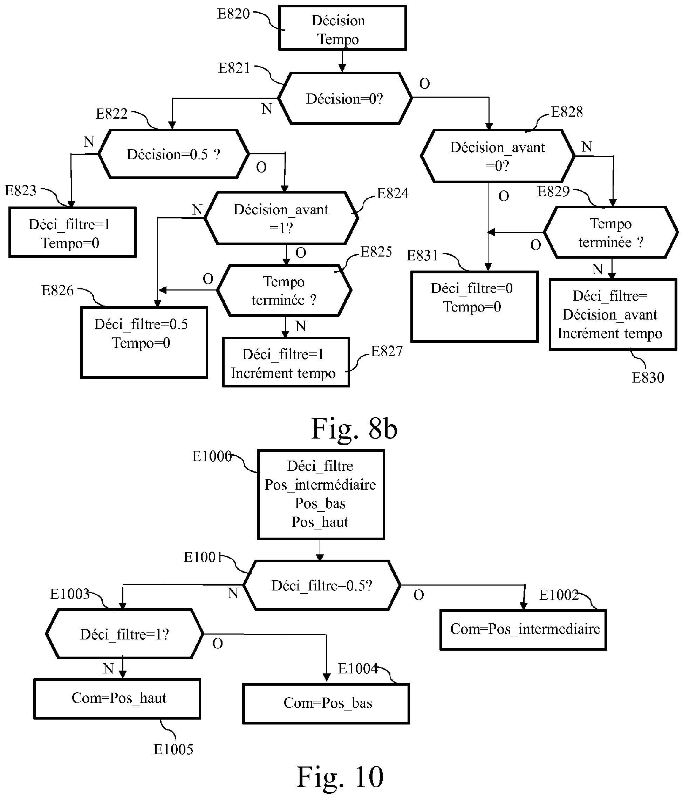

A l'étape suivante E403, le processeur 200 lance l'exécution de la fonction temporisation qui sera décrite en détail en regard de la Fig. 8a ou 8b.

A l'étape suivante E404, le processeur 200 lance l'exécution de la fonction commande qui sera décrite en détail en regard de la Fig. 10.

La **Fig. 5** représente un diagramme illustrant l'algorithme exécuté par le dispositif de commande pour l'exécution de la fonction criticité selon la présente invention.

Le présent algorithme est plus précisément exécuté par le processeur 200 du contrôleur 100.

A l'étape E500, le processeur 200 obtient la valeur de la température intérieure T_int de la pièce 10 mesurée par le capteur 106.

A l'étape suivante E501, le processeur 200 vérifie si la valeur de la variable Niveau_avant est égale à deux.

A la première exécution du présent algorithme, la variable Niveau_avant est initialisée à la valeur deux, ensuite la variable Niveau avant est la valeur du niveau de criticité déterminée lors de la précédente exécution de la fonction criticité.

Si la valeur de la variable Niveau_avant est égale à deux, le processeur 200 passe à l'étape E502.

Si la valeur de la variable Niveau_avant est différente de deux, le processeur 200 passe à l'étape E507.

A l'étape E502, le processeur 200 vérifie si la température intérieure T_int de la pièce 10 mesurée à l'étape E500 est supérieure à un seuil prédéterminé T_seuil2.

Le seuil prédéterminé T_seuil2 dépend de la saison au cours de laquelle le présent algorithme est exécuté.

Par exemple, le seuil prédéterminé T_seuil2 est égal à 24 degrés en période de faible ensoleillement et est égal à 23 degrés en période de fort ensoleillement.

Dans un mode particulier de réalisation de la présente invention, la valeur du seuil T_seuil2 peut être augmentée ou diminuée d'un ou plusieurs degrés par l'interface homme machine du dispositif de contrôle du chauffage par exemple dans une plage comprise entre +/- 5 degrés.

Si la température intérieure T_int est supérieure au seuil prédéterminé T_seuil2, le processeur 200 passe à l'étape E503. Dans la négative, le processeur 200 passe à l'étape E504.

A l'étape E503, le processeur 200 met le niveau de criticité Niveau_criticité à la valeur trois et termine la fonction criticité.

A l'étape E504, le processeur 200 vérifie si la température intérieure T_int de la pièce 10 mesurée à l'étape E500 est inférieure à un seuil prédéterminé T_seuil1 minoré de un.

Le seuil prédéterminé T_seuil1 dépend de la saison au cours de laquelle le présent algorithme est exécuté.

Par exemple, le seuil prédéterminé T_seuil1 est égal à 22 degrés en période de faible ensoleillement, c'est-à-dire l'hiver, l'automne et le printemps et est égal à 23 degrés en période de fort ensoleillement, c'est-à- dire l'été.

Dans un mode particulier de réalisation de la présente invention, la valeur du seuil T_seuil1 peut être augmentée ou diminuée d'un ou plusieurs degrés par l'interface homme machine du dispositif de contrôle du chauffage par exemple dans une plage comprise entre +/- 5 degrés.

Si la température intérieure T_int est inférieure au seuil prédéterminé T_seuil1 minoré de un, le processeur 200 passe à l'étape E505. Dans la négative, le processeur 200 passe à l'étape E506.

A l'étape E505, le processeur 200 met le niveau de criticité Niveau_criticité à la valeur un et termine la fonction criticité.

A l'étape E506, le processeur 200 met le niveau de criticité Niveau_criticité à la valeur deux et termine la fonction criticité.

A l'étape E507, le processeur 200 vérifie si la valeur de la variable Niveau_avant est égale à un.

Si la valeur de la variable Niveau_avant est égale à un, le processeur 200 passe à l'étape E508.

Si la valeur de la variable Niveau_avant est différente de un, le processeur 200 passe à l'étape E511.

A l'étape E508, le processeur 200 vérifie si la température intérieure T_int est inférieure au seuil prédéterminé T_seuil1.

Si la température intérieure T_int est inférieure au seuil prédéterminé T_seuil1, le processeur 200 passe à l'étape E509. Dans la négative, le processeur 200 passe à l'étape E510.

A l'étape E509, le processeur 200 met le niveau de criticité Niveau_criticité à la valeur un et termine la fonction criticité.

A l'étape E510, le processeur 200 met le niveau de criticité Niveau_criticité à la valeur deux et termine la fonction criticité.

A l'étape E511, le processeur 200 vérifie si la température intérieure T_int est inférieure au seuil prédéterminé T_seuil2 minoré de un.

Si la température intérieure T_int est inférieure au seuil prédéterminé T_seuil2 minoré de un, le processeur 200 passe à l'étape E512. Dans la négative, le processeur 200 passe à l'étape E513.

A l'étape E512, le processeur 200 met le niveau de criticité Niveau_criticité à la valeur deux et termine la fonction criticité.

A l'étape E510, le processeur 200 met le niveau de criticité Niveau_criticité à la valeur trois et termine la fonction criticité.

La **Fig. 6a** représente un diagramme illustrant l'algorithme exécuté par le dispositif de commande pour la détermination, en période de fort ensoleillement, de la fonction paramètre volet permettant la décision de la commande d'au moins un dispositif d'occultation d'au moins une ouverture selon la présente invention.

Le présent algorithme est plus précisément exécuté par le processeur 200 du contrôleur 100.

A l'étape E600, le processeur 200 obtient le niveau de criticité Niveau_criticité déterminé lors de l'exécution de l'algorithme de la Fig. 5.

A l'étape suivante E601, le processeur 200 vérifie si le niveau de criticité Niveau_criticité est égal à un.

Si le niveau de criticité Niveau_criticité est égal à un, le processeur 200 passe à l'étape E602. Dans la négative, le processeur 200 passe à l'étape E603.

A l'étape E602, le processeur 200 met le paramètre h_ouvert à la valeur nulle, le coefficient directeur alpha1 à la valeur nulle, le coefficient directeur alpha2 à la valeur nulle, l'ordonnée à l'origine SF1 à la valeur 2000, l'ordonnée à l'origine SF2 à la valeur 2000 et termine la fonction paramètre volet.

A l'étape E603, le processeur 200 vérifie si le niveau de criticité Niveau_criticité est égal à deux.

Si le niveau de criticité Niveau_criticité est égal à deux, le processeur 200 passe à l'étape E605. Dans la négative, le processeur 200 passe à l'étape E604.

A l'étape E604, le processeur 200 met le paramètre h_ouvert à 18 heures, le coefficient directeur alpha1 à la valeur nulle, le coefficient directeur alpha2 à la valeur nulle, l'ordonnée à l'origine SF1 à la valeur 150, l'ordonnée à l'origine SF2 à la valeur 150 et termine la fonction paramètre volet.

A l'étape E605, le processeur 200 met le paramètre h_ouvert à 17 heures, le coefficient directeur alpha1 à la valeur 10, le coefficient directeur alpha2 à la valeur 10, l'ordonnée à l'origine SF1 à la valeur 200, l'ordonnée à l'origine SF2 à la valeur 400 et termine la fonction paramètre volet.

La **Fig. 6b** représente un diagramme illustrant l'algorithme exécuté par le dispositif de commande pour la détermination, en période de faible ensoleillement, de la fonction paramètre volet permettant la décision de la commande d'au moins un dispositif d'occultation d'au moins une ouverture selon la présente invention.

Le présent algorithme est plus précisément exécuté par le processeur 200 du contrôleur 100.

A l'étape E620, le processeur 200 obtient le niveau de criticité Niveau_criticité déterminé lors de l'exécution de l'algorithme de la Fig. 5.

A l'étape suivante E621, le processeur 200 vérifie si le niveau de criticité Niveau_criticité est égal à un.

Si le niveau de criticité Niveau_criticité est égal à un, le processeur 200 passe à l'étape E622. Dans la négative, le processeur 200 passe à l'étape E623.

A l'étape E622, le processeur 200 met le paramètre h_ouvert à la valeur nulle, le coefficient directeur alpha1 à la valeur nulle, le coefficient directeur alpha2 à la valeur nulle, l'ordonnée à l'origine SF1 à la valeur 2000, l'ordonnée à l'origine SF2 à la valeur 2000 et termine la fonction paramètre volet.

A l'étape E623, le processeur 200 vérifie si le niveau de criticité Niveau_criticité est égal à deux.

Si le niveau de criticité Niveau_criticité est égal à deux, le processeur 200 passe à l'étape E625. Dans la négative, le processeur 200 passe à l'étape E624.

A l'étape E624, le processeur 200 met le paramètre h_ouvert à 15 heures, le coefficient directeur alpha 1 à la valeur nulle, le coefficient directeur alpha2 à la valeur nulle, l'ordonnée à l'origine SF1 à la valeur 400, l'ordonnée à l'origine SF2 à la valeur 400 et termine la fonction paramètre volet.

A l'étape E625, le processeur 200 met le paramètre h_ouvert à 15 heures, le coefficient directeur alpha 1 à la valeur nulle, le coefficient directeur alpha2 à la valeur nulle, l'ordonnée à l'origine SF1 à la valeur 500, l'ordonnée à l'origine SF2 à la valeur 700 et termine la fonction paramètre volet.

Les paramètres déterminés par la fonction paramètre volet sont, comme cela a été décrit en référence aux Figs. 6a et 6b, dépendants de la date à laquelle les mesures ont été effectuées.

La **Fig. 7** représente un diagramme illustrant l'algorithme exécuté par le dispositif de commande pour la détermination d'un paramètre de décision de la commande d'au moins un dispositif d'occultation d'au moins une ouverture selon la présente invention.

Le présent algorithme est plus précisément exécuté par le processeur 200 du contrôleur 100.

A l'étape E700, le processeur 200 obtient la valeur mesurée par le capteur de rayonnement 102, l'heure fournie par l'horloge 107 et les valeurs des variables SF1, SF2, alpha1, alpha2 et h_ouvert déterminées lors de la précédente exécution de la fonction paramètre volet décrite en référence à la Fig. 6a ou 6b.

A l'étape E701, le processeur 200 vérifie si l'heure fournie par l'horloge 107 est supérieure à la valeur de la variable h_ouvert.

Si l'heure fournie par l'horloge 107 est supérieure à la valeur de la variable h_ouvert, le processeur 200 passe à l'étape E702. Dans la négative, le processeur 200 passe à l'étape E703.

A l'étape E702, le processeur 200 met la variable Décision à la valeur nulle et termine la fonction paramètre de décision.

Lorsque la variable Décision est à la valeur nulle, le dispositif d'occultation 101laisse passer la totalité ou la quasi-totalité du rayonnement solaire à travers l'ouverture 103 si d'autres conditions, explicitées par la suite, sont remplies.

Lorsque le rayonnement solaire mesuré est, à un instant donné, inférieur à la valeur de rayonnement donnée par la courbe Dr1, le dispositif d'occultation 101 laisse passer la totalité ou la quasi-totalité du rayonnement solaire à travers l'ouverture 103 si d'autres conditions, explicitées par la suite, sont remplies.

A l'étape E703, le processeur 200 vérifie si la valeur Flux du rayonnement mesuré par le capteur de rayonnement 102 est inférieure à la droite Dr1.

Si la valeur Flux mesurée par le capteur de rayonnement 102 est inférieure à la droite Dr1, le processeur 200 passe à l'étape E704. Dans la négative, le processeur 200 passe à l'étape E705.

A l'étape E704, le processeur 200 met la variable Décision à la valeur nulle et termine la fonction paramètre de décision.

A l'étape E703, le processeur 200 vérifie si la valeur Flux mesurée par le capteur de rayonnement 102 est supérieure à la droite Dr2.

Si la valeur Flux mesurée par le capteur de rayonnement 102 est supérieure à la droite Dr2, le processeur 200 passe à l'étape E706. Dans la négative, le processeur 200 passe à l'étape E707.

A l'étape E706, le processeur 200 met la variable Décision à la valeur un et termine la fonction paramètre de décision.

Lorsque la variable Décision est à la valeur un, le dispositif d'occultation 101 occulte totalement ou en quasi-totalité l'ouverture 103 si d'autres conditions, explicitées par la suite, sont remplies.

A l'étape E707, le processeur 200 met la variable Décision à la valeur un demi et termine la fonction paramètre de décision.

Lorsque la variable Décision est à la valeur un demi, le dispositif d'occultation 101laisse passer partiellement le rayonnement solaire à travers l'ouverture 103.

Le paramètre Décision est, comme cela a été décrit en référence aux Figs. 6a et 6b, dépendant de la date à laquelle la mesure de la valeur Flux du rayonnement a été effectuée ainsi que de la température intérieure T_int.

La **Fig. 8a** représente un diagramme illustrant l'algorithme exécuté par le dispositif de commande pour la gestion, en période de faible ensoleillement, d'une fonction pour la commande d'au moins un dispositif d'occultation d'au moins une ouverture selon la présente invention.

Le présent algorithme est plus précisément exécuté par le processeur 200 du contrôleur 100.

A l'étape E800, le processeur 200 obtient la valeur de la variable décision déterminée par l'algorithme de la Fig. 7, la valeur du compteur journalier d'actionnement du dispositif d'occultation, ainsi que la valeur d'un seuil d'une temporisation qui est par exemple égal à 30 minutes ou compris entre 15 et 60 minutes.

La valeur du compteur journalier d'actionnement du dispositif d'occultation est incrémentée d'une unité lorsque le dispositif d'occultation passe d'une position ouverte à la position intermédiaire pour revenir à la position ouverte.

La valeur du compteur journalier d'actionnement du dispositif d'occultation est incrémentée d'une unité lorsque le dispositif d'occultation passe d'une position ouverte à la position intermédiaire puis à la position fermée pour revenir à la position intermédiaire ou à la position ouverte.

La valeur du compteur journalier d'actionnement du dispositif d'occultation est incrémentée de deux unités lorsque le dispositif d'occultation passe d'une position ouverte à la position intermédiaire puis à la position fermée pour revenir à la position intermédiaire et à la position fermée.

A l'étape suivante E801, le processeur 200 vérifie si la variable Décision est égale à un.

Si la variable Décision est égale à un, le processeur 200 passe à l'étape E808. Dans la négative, le processeur 200 passe à l'étape E802.

A l'étape E802, le processeur 200 vérifie si la variable Décision est égale à un demi.

Si la variable Décision est égale à un demi, le processeur 200 passe à l'étape E804. Dans la négative, le processeur 200 passe à l'étape E803.

A l'étape E803, le processeur 200 met la variable Déci_filtre à la valeur nulle, met la variable Tempo à la valeur nulle et termine la fonction temporisation.

Lorsque la variable Déci_filtre est à la valeur nulle, le dispositif d'occultation 101laisse passer la totalité du rayonnement solaire à travers l'ouverture 103 si d'autres conditions, explicitées par la suite, sont remplies.

A l'étape E804, le processeur 200 vérifie si la variable Décision_avant est nulle.

La variable Décision avant est la valeur déterminée par l'algorithme de la Fig. 7 lors de la précédente exécution de l'algorithme de la Fig. 4.

Si la variable Décision_avant est nulle, le processeur 200 passe à l'étape E805. Dans la négative, le processeur 200 passe à l'étape E806.

A l'étape E805, le processeur 200 vérifie si la valeur de la variable Tempo est supérieure ou égale au seuil d'une temporisation.

Si la valeur de la variable Tempo est supérieure ou égale au seuil d'une temporisation, le processeur 200 passe à l'étape E806. Dans la négative, le processeur 200 passe à l'étape E807.

Dans un mode particulier de réalisation de la présente invention, le processeur 200 vérifie en outre à l'étape E805 si la valeur d'un compteur journalier d'actionnement du dispositif d'occultation est supérieure à la valeur trois. Si la valeur d'un compteur journalier est supérieure à trois, le processeur 200 passe à l'étape E807. Si la valeur du compteur journalier est inférieure ou égale à trois et si la valeur de la variable Tempo est supérieure ou égale au seuil d'une temporisation, le processeur 200 passe à l'étape E806.

A l'étape E806, le processeur 200 met la variable Déci_filtre à la valeur un demi, met la variable Tempo à la valeur nulle et termine la fonction temporisation.

Lorsque la variable Déci _filtre est à la valeur un demi, le dispositif d'occultation 101laisse passer une partie du rayonnement solaire à travers l'ouverture 103 si d'autres conditions, explicitées par la suite, sont remplies.

A l'étape E807, le processeur 200 met la variable Déci_filtre à la valeur nulle, incrémente la variable Tempo à la valeur correspondant à la périodicité d'exécution de l'algorithme de la Fig. 4et termine la fonction temporisation.

A l'étape E808, le processeur 200 vérifie si la variable Décision_avant est égale à un.

Si la variable Décision_avant est égale à un, le processeur 200 passe à l'étape E810. Dans la négative, le processeur 200 passe à l'étape E809.

A l'étape E809, le processeur 200 vérifie si la valeur de la variable Tempo est supérieure ou égale au seuil d'une temporisation.

Si la valeur de la variable Tempo est supérieure ou égale au seuil d'une temporisation, le processeur 200 passe à l'étape E810. Dans la négative, le processeur 200 passe à l'étape E811.

Dans un mode particulier de réalisation de la présente invention, le processeur 200 vérifie en outre à l'étape E809 si la valeur d'un compteur journalier d'actionnement du dispositif d'occultation est supérieure à la valeur trois. Si la valeur d'un compteur journalier est supérieure à trois, le processeur 200 passe à l'étape E811. Si la valeur du compteur journalier est inférieure ou égale à trois et si la valeur de la variable Tempo est supérieure ou égale au seuil d'une temporisation, le processeur 200 passe à l'étape E810.

A l'étape E810, le processeur 200 met la variable Déci_filtre à la valeur un, met la variable Tempo à la valeur nulle et termine la fonction temporisation.

Lorsque la variable Déci_filtre est à la valeur un, le dispositif d'occultation 101 laisse passer une partie ou ne laisse pas passer le rayonnement solaire à travers l'ouverture 103 si d'autres conditions, explicitées par la suite, sont remplies.

A l'étape E811, le processeur 200 met la variable Déci_filtre à la valeur de la variable Décision_avant, incrémente la variable Tempo à la valeur correspondant à la périodicité d'exécution de l'algorithme de la Fig. 4et termine la fonction temporisation.

Comme cela a été décrit en référence à la Fig. 8a, si la date d'obtention de la température de la pièce du bâtiment et de la valeur du rayonnement solaire est comprise dans une période de faible ensoleillement, la commande du dispositif d'occultation est annulée pendant une période donnée si le dispositif d'occultation est, à l'itération précédente, dans une position permettant une quantité plus importante de rayonnement solaire de traverser l'ouverture que celle permise par la position du dispositif d'occultation dont la commande est annulée.

La **Fig. 8b** représente un diagramme illustrant l'algorithme exécuté par le dispositif de commande pour la gestion, en période de fort ensoleillement, d'une temporisation pour la commande d'au moins un dispositif d'occultation d'au moins une ouverture selon la présente invention.

Le présent algorithme est plus précisément exécuté par le processeur 200 du contrôleur 100.

A l'étape E820, le processeur obtient la valeur de la variable décision déterminée par l'algorithme de la Fig. 7, la valeur du compteur journalier d'actionnement du dispositif d'occultation, ainsi que la valeur d'un seuil d'une temporisation qui est par exemple égale à 30 minutes ou comprise entre 15 et 60 minutes.

La valeur du compteur journalier d'actionnement du dispositif d'occultation est incrémentée d'une unité lorsque le dispositif d'occultation passe d'une position ouverte à la position intermédiaire pour revenir à la position ouverte.

La valeur du compteur journalier d'actionnement du dispositif d'occultation est incrémentée d'une unité lorsque le dispositif d'occultation passe d'une position ouverte à la position intermédiaire puis à la position fermée pour revenir à la position intermédiaire ou à la position ouverte.

La valeur du compteur journalier d'actionnement du dispositif d'occultation est incrémentée de deux unités lorsque le dispositif d'occultation passe d'une position ouverte à la position intermédiaire puis à la position fermée pour revenir à la position intermédiaire et à la position fermée.

A l'étape suivante E821, le processeur 200 vérifie si la variable Décision est nulle.

Si la variable Décision est égale nulle, le processeur 200 passe à l'étape E828. Dans la négative, le processeur 200 passe à l'étape E822.

A l'étape E822, le processeur 200 vérifie si la variable Décision est égale à un demi.

Si la variable Décision est égale à un demi, le processeur 200 passe à l'étape E824. Dans la négative, le processeur 200 passe à l'étape E823.

A l'étape E823, le processeur 200 met la variable Déci_filtre à la valeur un, met la variable Tempo à la valeur nulle et termine la fonction temporisation.

A l'étape E824, le processeur 200 vérifie si la variable Décision_avant est égale à un.

Si la variable Décision_avant est nulle, le processeur 200 passe à l'étape E825. Dans la négative, le processeur 200 passe à l'étape E826.

A l'étape E825, le processeur 200 vérifie si la valeur de la variable Tempo est supérieure ou égale au seuil d'une temporisation.

Si la valeur de la variable Tempo est supérieure ou égale au seuil d'une temporisation, le processeur 200 passe à l'étape E826. Dans la négative, le processeur 200 passe à l'étape E827.

Dans un mode particulier de réalisation de la présente invention, le processeur 200 vérifie en outre à l'étape E825 si la valeur d'un compteur journalier d'actionnement du dispositif d'occultation est supérieure à la valeur trois. Si la valeur d'un compteur journalier est supérieure à trois, le processeur 200 passe à l'étape E827. Si la valeur du compteur journalier est inférieure ou égale à trois et si la valeur de la variable Tempo est supérieure ou égale au seuil d'une temporisation, le processeur 200 passe à l'étape E826.

A l'étape E826, le processeur 200 met la variable Déci filtre à la valeur un demi, met la variable Tempo à la valeur nulle et termine la fonction temporisation.

A l'étape E827, le processeur 200 met la variable Déci filtre à la valeur un, incrémente la variable Tempo à la valeur correspondant à la périodicité d'exécution de l'algorithme de la Fig. 4et termine la fonction temporisation.

Lorsque la variable Déci filtre est à la valeur un, le dispositif d'occultation 101 laisse passer une partie ou ne laisse pas passer le rayonnement solaire à travers l'ouverture 103 si d'autres conditions, explicitées par la suite, sont remplies.

A l'étape E828, le processeur 200 vérifie si la variable Décision_avant est nulle.

Si la variable Décision avant est nulle, le processeur 200 passe à l'étape E831. Dans la négative, le processeur 200 passe à l'étape E829.

A l'étape E829, le processeur 200 vérifie si la valeur de la variable Tempo est supérieure ou égale au seuil d'une temporisation.

Si la valeur de la variable Tempo est supérieure ou égale au seuil d'une temporisation, le processeur 200 passe à l'étape E831. Dans la négative, le processeur 200 passe à l'étape E830.

Dans un mode particulier de réalisation de la présente invention, le processeur 200 vérifie en outre à l'étape E829 si la valeur d'un compteur journalier d'actionnement du dispositif d'occultation est supérieure à la valeur trois. Si la valeur d'un compteur journalier est supérieure à trois, le processeur 200 passe à l'étape E831. Si la valeur du compteur journalier est inférieure ou égale à trois et si la valeur de la variable Tempo est supérieure ou égale au seuil d'une temporisation, le processeur 200 passe à l'étape E830.

A l'étape E831, le processeur 200 met la variable Déci_filtre à la valeur nulle, met la variable Tempo à la valeur nulle et termine la fonction temporisation.

A l'étape E830, le processeur 200 met la variable Déci_filtre à la valeur de la variable Décision_avant, incrémente la variable Tempo à la valeur correspondant à la périodicité d'exécution de l'algorithme de la Fig. 4et termine la fonction temporisation.

Comme cela a été décrit en référence à la Fig. 8b, si la date d'obtention de la température de la pièce du bâtiment et de la valeur du rayonnement solaire est comprise dans une période de fort ensoleillement, la commande du dispositif d'occultation est annulée pendant une période donnée si le dispositif d'occultation est, à l'itération précédente, dans une position permettant une quantité moins importante de rayonnement solaire de traverser l'ouverture que celle permise par la position du dispositif d'occultation dont la commande est annulée.

La **Fig. 9** représente un diagramme illustrant l'algorithme exécuté par le dispositif de commande pour la détermination, en période de fort ensoleillement, de différentes positions d'au moins un dispositif d'occultation d'au moins une ouverture selon la présente invention.

Le présent algorithme est plus précisément exécuté par le processeur 200 du contrôleur 100 tous les jours en période de fort ensoleillement entre 3H30mn et 4H30mn du matin ou au lever du jour.

Le lever du jour est par exemple détecté par le capteur de rayonnement 102 lorsque celui-ci mesure un rayonnement supérieur à une valeur comprise entre 5 à 10 W/m². Le capteur de rayonnement 102, lorsque la mesure du rayonnement dépasse la valeur comprise entre 5 à 10W/m2, notifie le contrôleur 100 du lever du jour ou le contrôleur 100, en prenant périodiquement la valeur mesurée par le capteur de rayonnement détecte le lever du jour lorsque la valeur mesurée par le capteur de rayonnement dépasse la valeur comprise entre 5 à 10W/m2.

A l'étape E900, le processeur 200 obtient du capteur 108, la température extérieure T_ext.

A l'étape suivante E901, le processeur 200 vérifie si la température extérieure T_ext est supérieure à 17 degrés.

Si la température extérieure T_ext est supérieure à 17 degrés ou 16 degrés selon un mode particulier de réalisation, le processeur 200 passe à l'étape E902. Dans la négative, le processeur 200 passe à l'étape E903.

Dans un autre mode de réalisation, le processeur 200, au lieu de vérifier si la température extérieure T_ext est supérieure à 17 degrés, vérifie si la saison déterminée par la mesure de la température au lever du soleil est l'été.

Si la saison est l'été, le processeur 200 passe à l'étape E902. Dans la négative, le processeur 200 passe à l'étape E903.

A l'étape E902, le processeur 200 met la variable position intermédiaire Pos_intermédiaire à la valeur 0,75 et la variable position bas Pos_bas à la valeur 1et termine l'algorithme de la Fig. 9.

Lorsque la variable Pos_bas est à la valeur un, le dispositif d'occultation 101 occulte totalement ou en quasi-totalité l'ouverture 103 si d'autres conditions, explicitées par la suite, sont remplies.

Lorsque la variable Pos_intermédiaire est à la valeur 0,75, le dispositif d'occultation 101occulte 75% de la surface de l'ouverture 103.

A l'étape E903, le processeur 200 met la variable position intermédiaire Pos_intermédiaire à la valeur 0,4 et la variable position bas Pos_bas à la valeur 0.75et termine l'algorithme de la Fig. 9.

Lorsque la variable Pos_bas est à la valeur 0.4, le dispositif d'occultation 101occulte 40% de la surface de l'ouverture 103.

La position Poshaut correspondant à la configuration dans laquelle le dispositif d'occultation 101laisse passer la totalité ou la quasi-totalité du rayonnement solaire à travers l'ouverture 103 si d'autres conditions, explicitées par la suite, sont remplies.

La **Fig. 10** représente un diagramme illustrant l'algorithme exécuté par le dispositif de commande pour la détermination d'un paramètre de commande d'au moins un dispositif d'occultation d'au moins une ouverture selon la présente invention.

Le présent algorithme est plus précisément exécuté par le processeur 200 du contrôleur 100.

A l'étape E1000, le processeur 200 obtient la valeur de la variable Déci_filtre déterminée par la fonction décrite en référence à la Fig. 8a ou 8b et les valeurs des variables Pos_bas, Pos_intermédiaire et Pos_bas déterminées par la fonction décrite en référence à la Fig. 9.

A l'étape E1001, le processeur 200 vérifie si la valeur de la variable Déci_filtre est égale à un demi.

Si la valeur de la variable Déci filtre est égale à un demi, le processeur 200 passe à l'étape E1002. Dans la négative, le processeur 200 passe à l'étape 1001.

A l'étape E1002, le processeur 200 met la variable Com à la valeur de la variable Pos_Intermédiaire et commande le dispositif d'occultation pour que celui-ci se place à la position correspondante et interrompt l'exécution de l'algorithme.

A l'étape E1003, le processeur 200 vérifie si la valeur de la variable Déci_filtre est égale à un.

Si la valeur de la variable Déci filtre est égale à un, le processeur 200 passe à l'étape E1004. Dans la négative, le processeur 200 passe à l'étape 1005.

A l'étape E1004, le processeur 200 met la variable Com à la valeur de la variable Pos_bas et commande le dispositif d'occultation pour que celui-ci se place à la position correspondante et interrompt l'exécution de l'algorithme.

A l'étape E1005, le processeur 200 met la variable Com à la valeur de la variable Pos haut et commande le dispositif d'occultation pour que celui-ci laisse passer la totalité du rayonnement solaire à travers l'ouverture.

Lorsque la variable Com est égale à Pos_bas, le dispositif d'occultation 101ne laisse pas le rayonnement solaire à travers l'ouverture.

La présente invention est décrite dans un exemple de réalisation dans lequel deux périodes d'ensoleillement sont considérées.

La présente invention est aussi applicable lorsqu'un nombre supérieur de périodes est considéré. Par exemple une période correspondant à l'hiver, une période correspondant à l'été et une période correspondant à l'automne et le printemps ou une période correspondant à l'hiver, une période correspondant à l'été, une période correspondant à l'automne et une période correspondant au printemps. De même, l'invention est aussi applicable dans une configuration selon laquelle la commande des volets selon la présente invention ne sera exécutée que dans une seule période de temps, par exemple en hiver ou en hiver et une partie de l'automne et du printemps, la présente invention ne commandant pas le dispositif d'occultation pendant l'été.

## Revendications

1. Procédé de commande d'au moins un volet roulant motorisé (101) d'au moins une ouverture (103) d'une pièce (10) d'un bâtiment, **caractérisé en ce que** le procédé comporte les étapes de :
- obtention de la température de la pièce (106) du bâtiment,
- obtention d'une valeur du rayonnement solaire (102, 110),
- comparaison de la température de la pièce du bâtiment avec au moins un seuil de température pour déterminer une valeur d'un niveau de criticité, le niveau de criticité pouvant être égal à un, deux ou trois,
- détermination d'au moins un seuil de comparaison du rayonnement solaire à partir du résultat de la comparaison de la température de la pièce (106) avec ledit au moins un seuil, le seuil de comparaison du rayonnement solaire est en outre déterminé en fonction de la date (107) et de l'heure à laquelle la température de la pièce du bâtiment et le rayonnement solaire sont obtenus, le au moins un seuil de rayonnement solaire étant deux droites, chacune des droites ayant un coefficient directeur et une ordonnée à l'origine, le coefficient directeur et l'ordonnée à l'origine étant fonction de la valeur du niveau de criticité et d'une période de fort ou de faible ensoleillement,, la période de fort ensoleillement correspondant à l'été et/ou la seconde moitié du printemps et/ou la première partie de l'automne et la période de faible ensoleillement correspondant à l'hiver et/ou la première moitié du printemps et/ou la seconde moitié de l'automne,, les coefficients directeurs étant égal à 0 si la valeur du niveau de criticité est égal à 1 ou 3 en période de fort ensoleillement ou en période de faible ensoleillement, les coefficients directeurs étant égal à 10 si la valeur du niveau de criticité est égal à 2 en période de fort ensoleillement, l'ordonnée de la première droite affine est égale à 200 si le niveau de criticité est égal à 1 en période de fort ensoleillement, l'ordonnée de la seconde droite affine est égale à 200 si le niveau de criticité est égal à 1 en période de fort ensoleillement, l'ordonnée de la première droite affine est égale à 200 si le niveau de criticité est égal à 2 en période de fort ensoleillement, l'ordonnée de la seconde droite affine est égale à 400 si le niveau de criticité est égal à 2 en période de fort ensoleillement, l'ordonnée de la première droite affine est égale à 150 si le niveau de criticité est égal à 1 en période de fort ensoleillement, l'ordonnée de la seconde droite affine est égale à 150 si le niveau de criticité est égal à 1 en période de fort ensoleillement, l'ordonnée de la première droite affine est égale à 2000 si le niveau de criticité est égal à 1 en période de faible ensoleillement, l'ordonnée de la seconde droite affine est égale à 2000 si le niveau de criticité est égal à 1 en période de fort ensoleillement, l'ordonnée de la première droite affine est égale à 500 si le niveau de criticité est égal à 2 en période de faible ensoleillement, l'ordonnée de la seconde droite affine est égale à 700 si le niveau de criticité est égal à 2 en période de fort ensoleillement, l'ordonnée de la première droite affine est égale à 400 si le niveau de criticité est égal à 3 en période de faible ensoleillement, l'ordonnée de la seconde droite affine est égale à 400 si le niveau de criticité est égal à 3 en période de fort ensoleillement,
- comparaison de la valeur du rayonnement solaire obtenu avec le au moins un seuil de comparaison du rayonnement solaire déterminé,
- commande du volet roulant motorisé (101) en fonction de la comparaison du rayonnement solaire avec le au moins un seuil de comparaison du rayonnement solaire déterminé.

2. Procédé selon la revendication 1, **caractérisé en ce que** la température de la pièce (106) du bâtiment est comparée à deux seuils de température et **en ce que** les valeurs des seuils de température dépendent de la date à laquelle la température de la pièce du bâtiment et le rayonnement solaire sont obtenus.

3. Procédé selon l'une quelconque des revendications 1 à 2, **caractérisé en ce que** le procédé comporte en outre les étapes, exécutées lorsque la date à laquelle la température de la pièce du bâtiment et le rayonnement solaire sont obtenus correspond à une période de fort ensoleillement de :
- obtention de la température extérieure (108) du bâtiment à une heure prédéterminée de la journée,
- comparaison de la température extérieure (108) du bâtiment obtenue avec un seuil de comparaison de température extérieure,
et **en ce que** le volet roulant motorisé (101) est commandé pour prendre trois positions dont deux positions sont dépendantes de la comparaison de la température extérieure du bâtiment obtenue avec le seuil de comparaison de température extérieure.

4. Procédé selon l'une quelconque des revendications 1 à 3, **caractérisé en ce que** le procédé est exécuté itérativement, le volet roulant motorisé (101) étant commandé pour prendre trois positions différentes et **en ce que** le procédé comporte en outre une étape d'annulation de la commande du volet roulant motorisé qui est dépendante de la position du volet roulant motorisé lors de la précédente itération et de la date d'obtention de la température de la pièce du bâtiment et de la valeur du rayonnement solaire.

5. Procédé selon la revendication 4, **caractérisé en ce que** si la date d'obtention de la température de la pièce du bâtiment et de la valeur du rayonnement solaire est comprise dans une période de fort ensoleillement, la commande du volet roulant motorisé est annulée pendant une période donnée si le volet roulant motorisé est, à l'itération précédente, dans une position permettant une quantité moins importante de rayonnement solaire de traverser l'ouverture que celle permise par la position du volet roulant motorisé dont la commande est annulée.

6. Procédé selon la revendication 5, **caractérisé en ce que** si la date d'obtention de la température de la pièce du bâtiment et de la valeur du rayonnement solaire est comprise dans une période de faible ensoleillement, la commande du volet roulant motorisé est annulée pendant une période donnée si le volet roulant motorisé est, à l'itération précédente, dans une position permettant une quantité plus importante de rayonnement solaire de traverser l'ouverture que celle permise par la position du volet roulant motorisé dont la commande est annulée.

7. Procédé selon l'une quelconque des revendications 1 à 6, **caractérisé en ce que** si le mode dans lequel le dispositif de commande de chauffage de la au moins une pièce est le mode de contrôle de chauffage, le procédé comporte en outre une étape de prise en compte de la température de consigne de la au moins une pièce et de modification d'au moins un seuil de température.

8. Procédé selon l'une quelconque des revendications 1 à 7, **caractérisé en ce que** le procédé comporte en outre une étape de comptage du nombre d'ouvertures ou de fermetures journalier du volet roulant motorisé d'au moins une ouverture d'une pièce du bâtiment et de limitation du nombre d'ouvertures ou de fermetures journalier du volet roulant motorisé.

9. Procédé selon la revendication 1, **caractérisé en ce que** la température de la pièce (106) du bâtiment est comparée à deux seuils de température et **en ce que** les valeurs des seuils de température dépendent de la saison à laquelle la température de la pièce du bâtiment et le rayonnement solaire sont obtenus et **en ce que** la saison est déterminée à partir de la température mesurée à l'extérieur du bâtiment à une heure prédéterminée ou à une heure correspondant au lever du soleil.

10. Dispositif de commande(100) d'au moins un volet roulant motorisé (101) d'au moins une ouverture (103) d'une pièce (10) d'un bâtiment, **caractérisé en ce que** le dispositif de commande comporte :
- des moyens d'obtention de la température de la pièce (106) du bâtiment,
- des moyens d'obtention d'une valeur du rayonnement solaire (102, 110),
- des moyens de comparaison de la température de la pièce du bâtiment avec au moins un seuil de température pour déterminer une valeur d'un niveau de criticité, le niveau de criticité pouvant être égal à un, deux ou trois,
- des moyens de détermination d'au moins un seuil de comparaison du rayonnement solaire à partir du résultat de la comparaison de la température de la pièce avec ledit au moins un seuil, le seuil de comparaison du rayonnement solaire est en outre déterminé en fonction de la date (107) et de l'heure à laquelle la température de la pièce du bâtiment et le rayonnement solaire sont obtenus, le au moins un seuil de rayonnement solaire étant deux droites, chacune des droites ayant un coefficient directeur et une ordonnée à l'origine, le coefficient directeur et l'ordonnée à l'origine étant fonction de la valeur du niveau de criticité et d'une période de fort ou de faible ensoleillement, la période de fort ensoleillement correspondant à l'été et/ou la seconde moitié du printemps et/ou la première partie de l'automne et la période de faible ensoleillement correspondant à l'hiver et/ou la première moitié du printemps et/ou la seconde moitié de l'automne, les coefficients directeurs étant égal à 0 si la valeur du niveau de criticité est égal à 1 ou 3 en période de fort ensoleillement ou en période de faible ensoleillement, les coefficients directeurs étant égal à 10 si la valeur du niveau de criticité est égal à 2 en période de fort ensoleillement, l'ordonnée de la première droite affine est égale à 200 si le niveau de criticité est égal à 1 en période de fort ensoleillement, l'ordonnée de la seconde droite affine est égale à 200 si le niveau de criticité est égal à 1 en période de fort ensoleillement, l'ordonnée de la première droite affine est égale à 200 si le niveau de criticité est égal à 2 en période de fort ensoleillement, l'ordonnée de la seconde droite affine est égale à 400 si le niveau de criticité est égal à 2 en période de fort ensoleillement, l'ordonnée de la première droite affine est égale à 150 si le niveau de criticité est égal à 1 en période de fort ensoleillement, l'ordonnée de la seconde droite affine est égale à 150 si le niveau de criticité est égal à 1 en période de fort ensoleillement, l'ordonnée de la première droite affine est égale à 2000 si le niveau de criticité est égal à 1 en période de faible ensoleillement, l'ordonnée de la seconde droite affine est égale à 2000 si le niveau de criticité est égal à 1 en période de fort ensoleillement, l'ordonnée de la première droite affine est égale à 500 si le niveau de criticité est égal à 2 en période de faible ensoleillement, l'ordonnée de la seconde droite affine est égale à 700 si le niveau de criticité est égal à 2 en période de fort ensoleillement, l'ordonnée de la première droite affine est égale à 400 si le niveau de criticité est égal à 3 en période de faible ensoleillement, l'ordonnée de la seconde droite affine est égale à 400 si le niveau de criticité est égal à 3 en période de fort ensoleillement,
- des moyens de comparaison de la valeur du rayonnement solaire obtenu avec le au moins un seuil de comparaison du rayonnement solaire déterminé,
- des moyens de commande du volet roulant motorisé (101) en fonction de la comparaison du rayonnement solaire avec le au moins un seuil de comparaison du rayonnement solaire déterminé.

## Patentansprüche

1. Verfahren zur Steuerung mindestens eines motorisierten Rollladens (101) mindestens einer Öffnungsfläche (103) eines Raums (10) eines Gebäudes, **dadurch gekennzeichnet, dass** das Verfahren die folgenden Schritte aufweist:
- Erhalt der Temperatur des Raums (106) des Gebäudes,
- Erhalt eines Werts der Sonnenstrahlung (102, 110),
- Vergleich der Temperatur des Raums des Gebäudes mit mindestens einer Temperaturgrenze, um einen Wert einer Kritikalitätsstufe zu bestimmen, wobei die Kritikalitätsstufe gleich eins, zwei oder drei sein kann,
- Bestimmung mindestens einer Vergleichsgrenze der Sonnenstrahlung ausgehend vom Ergebnis des Vergleichs der Temperatur des Raums (106) mit der mindestens einen Grenze, wobei die Vergleichsgrenze der Sonnenstrahlung außerdem abhängig vom Datum (107) und von der Uhrzeit bestimmt wird, zu der die Temperatur des Raums des Gebäudes und die Sonnenstrahlung erhalten werden, wobei die mindestens eine Sonnenstrahlungsgrenze aus zwei Geraden besteht, wobei jede der Geraden eine Steigung und einen y-Achsenabschnitt hat, wobei die Steigung und der y-Achsenabschnitt vom Wert der Kritikalitätsstufe und einem Zeitraum starker oder schwacher Sonneneinstrahlung abhängen, wobei der Zeitraum starker Sonneneinstrahlung dem Sommer und/oder der zweiten Hälfte des Frühlings und/oder dem ersten Teil des Herbsts entspricht, und der Zeitraum schwacher Sonneneinstrahlung dem Winter und/oder der ersten Hälfte des Frühlings und/oder der zweiten Hälfte des Herbsts, wobei die Steigungen gleich 0 sind, wenn der Wert der Kritikalitätsstufe in einem Zeitraum starker Sonneneinstrahlung oder einem Zeitraum schwacher Sonneneinstrahlung gleich 1 oder 3 ist, wobei die Steigungen gleich 10 sind, wenn der Wert der Kritikalitätsstufe in einem Zeitraum starker Sonneneinstrahlung gleich 2 ist, der y-Achsenabschnitt der ersten affinen Geraden gleich 200 ist, wenn die Kritikalitätsstufe in einem Zeitraum starker Sonneneinstrahlung gleich 1 ist, der y-Achsenabschnitt der zweiten affinen Geraden gleich 200 ist, wenn die Kritikalitätsstufe in einem Zeitraum starker Sonneneinstrahlung gleich 1 ist, der y-Achsenabschnitt der ersten affinen Geraden gleich 200 ist, wenn die Kritikalitätsstufe in einem Zeitraum starker Sonneneinstrahlung gleich 2 ist, der y-Achsenabschnitt der zweiten affinen Geraden gleich 400 ist, wenn die Kritikalitätsstufe in einem Zeitraum starker Sonneneinstrahlung gleich 2 ist, der y-Achsenabschnitt der ersten affinen Geraden gleich 150 ist, wenn die Kritikalitätsstufe in einem Zeitraum starker Sonneneinstrahlung gleich 1 ist, der y-Achsenabschnitt der zweiten affinen Geraden gleich 150 ist, wenn die Kritikalitätsstufe in einem Zeitraum starker Sonneneinstrahlung gleich 1 ist, der y-Achsenabschnitt der ersten affinen Geraden gleich 2000 ist, wenn die Kritikalitätsstufe in einem Zeitraum schwacher Sonneneinstrahlung gleich 1 ist, der y-Achsenabschnitt der zweiten affinen Geraden gleich 2000 ist, wenn die Kritikalitätsstufe in einem Zeitraum starker Sonneneinstrahlung gleich 1 ist, der y-Achsenabschnitt der ersten affinen Geraden gleich 500 ist, wenn die Kritikalitätsstufe in einem Zeitraum schwacher Sonneneinstrahlung gleich 2 ist, der y-Achsenabschnitt der zweiten affinen Geraden gleich 700 ist, wenn die Kritikalitätsstufe in einem Zeitraum starker Sonneneinstrahlung gleich 2 ist, der y-Achsenabschnitt der ersten affinen Geraden gleich 400 ist, wenn die Kritikalitätsstufe in einem Zeitraum schwacher Sonneneinstrahlung gleich 3 ist, der y-Achsenabschnitt der zweiten affinen Geraden gleich 400 ist, wenn die Kritikalitätsstufe in einem Zeitraum starker Sonneneinstrahlung gleich 3 ist,
- Vergleich des erhaltenen Werts der Sonnenstrahlung mit der mindestens einen bestimmten Vergleichsgrenze der Sonnenstrahlung,
- Steuerung des motorisierten Rollladens (101) abhängig vom Vergleich der Sonnenstrahlung mit der mindestens einen bestimmten Vergleichsgrenze der Sonnenstrahlung.

2. Verfahren nach Anspruch 1, **dadurch gekennzeichnet, dass** die Temperatur des Raums (106) des Gebäudes mit zwei Temperaturgrenzen verglichen wird, und dass die Werte der Temperaturgrenzen von dem Datum abhängen, an dem die Temperatur des Raums des Gebäudes und die Sonnenstrahlung erhalten werden.

3. Verfahren nach einem der Ansprüche 1 bis 2, **dadurch gekennzeichnet, dass** das Verfahren außerdem die folgenden Schritte aufweist, die ausgeführt werden, wenn das Datum, an dem die Temperatur des Raums des Gebäudes und die Sonnenstrahlung erhalten werden, einem Zeitraum starker Sonneneinstrahlung entspricht:
- Erhalt der Außentemperatur (108) des Gebäudes zu einer vorbestimmten Tageszeit,
- Vergleich der erhaltenen Außentemperatur (108) des Gebäudes mit einer Außentemperatur-Vergleichsgrenze,
und dass der motorisierte Rollladen (101) gesteuert wird, um drei Stellungen einzunehmen, von denen zwei Stellungen vom Vergleich der erhaltenen Außentemperatur des Gebäudes mit der Außentemperatur-Vergleichsgrenze abhängen.

4. Verfahren nach einem der Ansprüche 1 bis 3, **dadurch gekennzeichnet, dass** das Verfahren iterativ ausgeführt wird, wobei der motorisierte Rollladen (101) gesteuert wird, um drei verschiedene Stellungen einzunehmen, und dass das Verfahren außerdem einen Schritt der Aufhebung der Steuerung des motorisierten Rollladens aufweist, der von der Stellung des motorisierten Rollladens bei der vorhergehenden Iteration und vom Datum des Erhalts der Temperatur des Raums des Gebäudes und dem Wert der Sonnenstrahlung abhängt.

5. Verfahren nach Anspruch 4, **dadurch gekennzeichnet, dass**, wenn das Erhaltsdatum der Temperatur des Raums des Gebäudes und des Werts der Sonnenstrahlung in einem Zeitraum starker Sonneneinstrahlung enthalten ist, die Steuerung des motorisierten Rollladens während eines gegebenen Zeitraums aufgehoben wird, wenn der motorisierte Rollladen bei der vorhergehenden Iteration in einer Stellung ist, die es einer geringeren Menge an Sonnenstrahlung als diejenige, die durch die Stellung des motorisierten Rollladens ermöglicht wird, dessen Steuerung aufgehoben ist, ermöglicht, die Öffnungsfläche zu durchqueren.

6. Verfahren nach Anspruch 5, **dadurch gekennzeichnet, dass**, wenn das Erhaltsdatum der Temperatur des Raums des Gebäudes und des Werts der Sonnenstrahlung in einem Zeitraum schwacher Sonneneinstrahlung enthalten ist, die Steuerung des motorisierten Rollladens während eines gegebenen Zeitraums aufgehoben wird, wenn der motorisierte Rollladen bei der vorhergehenden Iteration in einer Stellung ist, die es einer größeren Menge Sonnenstrahlung als diejenige, die durch die Stellung des motorisierten Rollladens ermöglicht wird, dessen Steuerung aufgehoben ist, ermöglicht, die Öffnungsfläche zu durchqueren.

7. Verfahren nach einem der Ansprüche 1 bis 6, **dadurch gekennzeichnet, dass**, wenn der Modus, in dem die Vorrichtung das Heizen des mindestens einen Raums steuert, der Heizkontrollmodus ist, das Verfahren außerdem einen Schritt der Berücksichtigung der Solltemperatur des mindestens einen Raums und der Änderung mindestens einer Temperaturgrenze aufweist.

8. Verfahren nach einem der Ansprüche 1 bis 7, **dadurch gekennzeichnet, dass** das Verfahren außerdem einen Schritt des Zählens der Anzahl von täglichen Öffnungs- oder Schließvorgängen des motorisierten Rollladens mindestens einer Öffnungsfläche eines Raums des Gebäudes und der Begrenzung der Anzahl von täglichen Öffnungs- oder Schließvorgängen des motorisierten Rollladens aufweist.

9. Verfahren nach Anspruch 1, **dadurch gekennzeichnet, dass** die Temperatur des Raums (106) des Gebäudes mit zwei Temperaturgrenzen verglichen wird, und dass die Werte der Temperaturgrenzen von der Jahreszeit abhängen, in der die Temperatur des Raums des Gebäudes und die Sonnenstrahlung erhalten werden, und dass die Jahreszeit ausgehend von der außerhalb des Gebäudes zu einer vorbestimmten Zeit oder einer dem Sonnenaufgang entsprechenden Zeit gemessenen Temperatur bestimmt wird.

10. Steuervorrichtung (100) mindestens eines motorisierten Rollladens (101) mindestens einer Öffnungsfläche (103) eines Raums (10) eines Gebäudes, **dadurch gekennzeichnet, dass** die Steuervorrichtung aufweist:
- Einrichtungen zum Erhalt der Temperatur des Raums (106) des Gebäudes,
- Einrichtungen zum Erhalt eines Werts der Sonnenstrahlung (102, 110),
- Einrichtungen zum Vergleich der Temperatur des Raums des Gebäudes mit mindestens einer Temperaturgrenze, um einen Wert einer Kritikalitätsstufe zu bestimmen, wobei die Kritikalitätsstufe gleich eins, zwei oder drei sein kann,
- Einrichtungen zur Bestimmung mindestens einer Vergleichsgrenze der Sonnenstrahlung ausgehend vom Ergebnis des Vergleichs der Temperatur des Raums mit der mindestens einen Grenze, wobei die Vergleichsgrenze der Sonnenstrahlung außerdem abhängig vom Datum (107) und von der Uhrzeit bestimmt wird, zu der die Temperatur des Raums des Gebäudes und die Sonnenstrahlung erhalten werden, wobei die mindestens eine Sonnenstrahlungsgrenze aus zwei Geraden besteht, wobei jede der Geraden eine Steigung und einen y-Achsenabschnitt hat, wobei die Steigung und der y-Achsenabschnitt vom Wert der Kritikalitätsstufe und von einem Zeitraum starker oder schwacher Sonneneinstrahlung abhängen, wobei der Zeitraum starker Sonneneinstrahlung dem Sommer und/oder der zweiten Hälfte des Frühlings und/oder dem ersten Teil des Herbsts entspricht, und der Zeitraum schwacher Sonneneinstrahlung dem Winter und/oder der ersten Hälfte des Frühlings und/oder der zweiten Hälfte des Herbsts entspricht, wobei die Steigungen gleich 0 sind, wenn der Wert der Kritikalitätsstufe in einem Zeitraum starker Sonneneinstrahlung oder einem Zeitraum schwacher Sonneneinstrahlung gleich 1 oder 3 ist, wobei die Steigungen gleich 10 sind, wenn der Wert der Kritikalitätsstufe in einem Zeitraum starker Sonneneinstrahlung gleich 2 ist, der y-Achsenabschnitt der ersten affinen Geraden gleich 200 ist, wenn die Kritikalitätsstufe in einem Zeitraum starker Sonneneinstrahlung gleich 1 ist, der y-Achsenabschnitt der zweiten affinen Geraden gleich 200 ist, wenn die Kritikalitätsstufe in einem Zeitraum starker Sonneneinstrahlung gleich 1 ist, der y-Achsenabschnitt der ersten affinen Geraden gleich 200 ist, wenn die Kritikalitätsstufe in einem Zeitraum starker Sonneneinstrahlung gleich 2 ist, der y-Achsenabschnitt der zweiten affinen Geraden gleich 400 ist, wenn die Kritikalitätsstufe in einem Zeitraum starker Sonneneinstrahlung gleich 2 ist, der y-Achsenabschnitt der ersten affinen Geraden gleich 150 ist, wenn die Kritikalitätsstufe in einem Zeitraum starker Sonneneinstrahlung gleich 1 ist, der y-Achsenabschnitt der zweiten affinen Geraden gleich 150 ist, wenn die Kritikalitätsstufe in einem Zeitraum starker Sonneneinstrahlung gleich 1 ist, der y-Achsenabschnitt der ersten affinen Geraden gleich 2000 ist, wenn die Kritikalitätsstufe in einem Zeitraum schwacher Sonneneinstrahlung gleich 1 ist, der y-Achsenabschnitt der zweiten affinen Geraden gleich 2000 ist, wenn die Kritikalitätsstufe in einem Zeitraum starker Sonneneinstrahlung gleich 1 ist, der y-Achsenabschnitt der ersten affinen Geraden gleich 500 ist, wenn die Kritikalitätsstufe in einem Zeitraum schwacher Sonneneinstrahlung gleich 2 ist, der y-Achsenabschnitt der zweiten affinen Geraden gleich 700 ist, wenn die Kritikalitätsstufe in einem Zeitraum starker Sonneneinstrahlung gleich 2 ist, der y-Achsenabschnitt der ersten affinen Geraden gleich 400 ist, wenn die Kritikalitätsstufe in einem Zeitraum schwacher Sonneneinstrahlung gleich 3 ist, der y-Achsenabschnitt der zweiten affinen Geraden gleich 400 ist, wenn die Kritikalitätsstufe in einem Zeitraum starker Sonneneinstrahlung gleich 3 ist,
- Einrichtungen zum Vergleich des erhaltenen Werts der Sonnenstrahlung mit der mindestens einen bestimmten Vergleichsgrenze der Sonnenstrahlung,
- Einrichtungen zur Steuerung des motorisierten Rollladens (101) abhängig vom Vergleich der Sonnenstrahlung mit der mindestens einen bestimmten Vergleichsgrenze der Sonnenstrahlung.

## Claims

1. Method for commanding at least one motorized roller shutter (101) of at least one aperture (103) of a room (10) of a building, **characterized in that** the method comprises steps of:
- obtaining the temperature of the room (106) of the building,
- obtaining a value of the solar radiation (102, 110),
- comparing the temperature of the room of the building with at least one temperature threshold in order to determine a value of a criticality level, the criticality level possibly being equal to one, two or three,
- determining at least one solar-radiation comparison threshold on the basis of the result of the comparison of the temperature of the room (106) with said at least one threshold, the solar-radiation comparison threshold further being determined depending on the date (107) and the time at which the temperature of the room of the building and the solar radiation are obtained, the at least one solar-radiation threshold being two straight lines, each of the straight lines having a gradient and an ordinate at the origin, the gradient and the ordinate at the origin being dependent on the value of the criticality level and on a period of high or of low insolation, the period of high insolation corresponding to summer and/or the second half of spring and/or the first portion of autumn and the period of low insolation corresponding to winter and/or the first half of spring and/or the second half of autumn, the gradients being equal to 0 if the value of the criticality level is equal to 1 or 3 in a period of high insolation or in a period of low insolation, the gradients being equal to 10 if the value of the criticality level is equal to 2 in a period of high insolation, the ordinate of the affine first straight line being equal to 200 if the criticality level is equal to 1 in a period of high insolation, the ordinate of the affine second straight line being equal to 200 if the criticality level is equal to 1 in a period of high insolation, the ordinate of the affine first straight line being equal to 200 if the criticality level is equal to 2 in a period of high insolation, the ordinate of the affine second straight line being equal to 400 if the criticality level is equal to 2 in a period of high insolation, the ordinate of the affine first straight line being equal to 150 if the criticality level is equal to 1 in a period of high insolation, the ordinate of the affine second straight line being equal to 150 if the criticality level is equal to 1 in a period of high insolation, the ordinate of the affine first straight line being equal to 2000 if the criticality level is equal to 1 in a period of low insolation, the ordinate of the affine second straight line being equal to 2000 if the criticality level is equal to 1 in a period of high insolation, the ordinate of the affine first straight line being equal to 500 if the criticality level is equal to 2 in a period of low insolation, the ordinate of the affine second straight line being equal to 700 if the criticality level is equal to 2 in a period of high insolation, the ordinate of the affine first straight line being equal to 400 if the criticality level is equal to 3 in a period of low insolation, the ordinate of the affine second straight line being equal to 400 if the criticality level is equal to 3 in a period of high insolation,
- comparing the value of the solar radiation obtained with the at least one determined solar-radiation comparison threshold,
- commanding the motorized roller shutter (101) depending on the comparison of the solar radiation with the least one determined solar-radiation comparison threshold.

2. Method according to Claim 1, **characterized in that** the temperature of the room (106) of the building is compared to two temperature thresholds and **in that** the values of the temperature thresholds depend on the date on which the temperature of the room of the building and the solar radiation are obtained.

3. Method according to either one of Claims 1 to 2, **characterized in that** the method further comprises steps, which are executed when the date on which the temperature of the room of the building and the solar radiation are obtained corresponds to a period of high insolation, of:
- obtaining the temperature (108) outside the building at a predetermined time of the day,
- comparing the obtained temperature (108) outside the building with an outside-temperature comparison threshold,
and **in that** the motorized roller shutter (101) is commanded to take three positions, two positions of which are dependent on the comparison of the obtained temperature outside the building with the outside-temperature comparison threshold.

4. Method according to any one of Claims 1 to 3, **characterized in that** the method is executed iteratively, the motorized roller shutter (101) being commanded to take three different positions and **in that** the method further comprises a step of cancelling the command of the motorized roller shutter depending on the position of the motorized roller shutter in the preceding iteration and on the date of obtainment of the temperature of the room of the building and on the value of the solar radiation.

5. Method according to Claim 4, **characterized in that**, if the date of obtainment of the temperature of the room of the building and of the value of the solar radiation is comprised in a period of high insolation, the command of the motorized roller shutter is cancelled for a given period if the motorized roller shutter is, in the preceding iteration, in a position allowing a less substantial amount of solar radiation to pass through the aperture then that permitted by the position of the motorized rolling roller shutter the command of which is cancelled.

6. Method according to Claim 5, **characterized in that**, if the date of obtainment of the temperature of the room of the building and of the value of the solar radiation is comprised in a period of low insolation, the command of the motorized roller shutter is cancelled for a given period if the motorized roller shutter is, in the preceding iteration, in a position allowing a more substantial amount of solar radiation to pass through the aperture than that permitted by the position of the motorized roller shutter the command of which is cancelled.

7. Method according to any one of Claims 1 to 6, **characterized in that**, if the mode in which the heating-commanding device of the at least one room is in is the heating-controlling mode, the method further comprises a step of taking into account the setpoint temperature of the at least one room and of modifying at least one temperature threshold.

8. Method according to any one of Claims 1 to 7, **characterized in that** the method further comprises a step of counting the number of times the motorized roller shutter of at least one aperture of a room of the building is opened or closed daily and of limiting the number of times the motorized roller shutter is opened or closed daily.

9. Method according to Claim 1, **characterized in that** the temperature of the room (106) of the building is compared to two temperature thresholds and **in that** the values of the temperature thresholds depend on the season in which the temperature of the room of the building and the solar radiation are obtained and **in that** the season is determined on the basis of the temperature measured outside the building at a predetermined time or at a time corresponding to sunrise.

10. Device (100) for commanding at least one motorized roller shutter (101) of at least one aperture (103) of a room (10) of a building, **characterized in that** the commanding device comprises:
- means for obtaining the temperature of the room (106) of the building,
- means for obtaining a value of the solar radiation (102, 110),
- means for comparing the temperature of the room of the building with at least one temperature threshold in order to determine a value of a criticality level, the criticality level possibly being equal to one, two or three,
- means for determining at least one solar-radiation comparison threshold on the basis of the result of the comparison of the temperature of the room with said at least one threshold, the solar-radiation comparison threshold further being determined depending on the date (107) and the time at which the temperature of the room of the building and the solar radiation are obtained, the at least one solar-radiation threshold being two straight lines, each of the straight lines having a gradient and an ordinate at the origin, the gradient and the ordinate at the origin being dependent on the value of the criticality level and on a period of high or of low insolation, the period of high insolation corresponding to summer and/or the second half of spring and/or the first portion of autumn and the period of low insolation corresponding to winter and/or the first half of spring and/or the second half of autumn, the gradients being equal to 0 if the value of the criticality level is equal to 1 or 3 in a period of high insolation or in a period of low insolation, the gradients being equal to 10 if the value of the criticality level is equal to 2 in a period of high insolation, the ordinate of the affine first straight line being equal to 200 if the criticality level is equal to 1 in a period of high insolation, the ordinate of the affine second straight line being equal to 200 if the criticality level is equal to 1 in a period of high insolation, the ordinate of the affine first straight line being equal to 200 if the criticality level is equal to 2 in a period of high insolation, the ordinate of the affine second straight line being equal to 400 if the criticality level is equal to 2 in a period of high insolation, the ordinate of the affine first straight line being equal to 150 if the criticality level is equal to 1 in a period of high insolation, the ordinate of the affine second straight line being equal to 150 if the criticality level is equal to 1 in a period of high insolation, the ordinate of the affine first straight line being equal to 2000 if the criticality level is equal to 1 in a period of low insolation, the ordinate of the affine second straight line being equal to 2000 if the criticality level is equal to 1 in a period of high insolation, the ordinate of the affine first straight line being equal to 500 if the criticality level is equal to 2 in a period of low insolation, the ordinate of the affine second straight line being equal to 700 if the criticality level is equal to 2 in a period of high insolation, the ordinate of the affine first straight line being equal to 400 if the criticality level is equal to 3 in a period of low insolation, the ordinate of the affine second straight line being equal to 400 if the criticality level is equal to 3 in a period of high insolation,
- means for comparing the value of the solar radiation obtained with the at least one determined solar-radiation comparison threshold,
- means for commanding the motorized roller shutter (101) depending on the comparison of the solar radiation with the least one determined solar-radiation comparison threshold.
